# FASCICULE DE BREVET EUROPEEN

(11) **EP 1 590 633 B1**
(45) Date de publication et mention de la délivrance du brevet: **26.12.2018**
(21) Numéro de dépôt: 04706715.2
(22) Date de dépôt: 30.01.2004
(51) Int. Cl.: G01D 4/00, G01D 5/347, G01F 15/06, G01F 15/00, G01F 1/06

(54) **DISPOSITIF DE DETECTION OPTIQUE POUR COMPTEUR**
OPTISCHE DETEKTIONSEINRICHTUNG FÜR EINEN ZÄHLER
OPTICAL DETECTOR DEVICE FOR A COUNTER

(30) Priorité: 05.02.2003 FR 0301316
(43) Date de publication de la demande: 02.11.2005
(73) Titulaire: Itron Global SARL, Liberty Lake WA 99019 (US)
(72) Inventeur: BULTEAU, Serge, F-69840 Julienas (FR); CROS, Alain, F-71680 Creches sur Saone (FR); DEMIA, Laurent, F-01120 Montluel (FR)
(74) Mandataire: Howson, Richard Giles Bentham
(86) Numéro de dépôt international: PCT/FR2004/000224
(87) Numéro de publication internationale: WO 2004/079648

(56) Documents cités:
- FR-A- 2 740 216
- GB-A- 2 230 629
- SU-A- 1 648 690
- US-A- 4 327 362
- US-A- 5 266 797

## Description

La présente invention concerne un dispositif de détection optique pour compteur, en particulier pour compteur de fluide, par exemple d'eau, destiné à permettre le relevé à distance de la consommation de ce compteur d'eau ou des opérations équivalentes de type journalisation ou alarme.

Elle concerne plus précisément un dispositif de détection optique pour compteur comportant un indicateur de consommation formé d'un disque indicateur rotatif pourvu d'un secteur dit actif et des éléments optiques du type émetteur et du type récepteur en vis à vis du disque, dont le signal optique reçu est traité pour déduire le nombre de tours du disque, Un tel dispositif est connu du document de brevet EP 0 380 794.

Selon ce document, le dispositif comprend un détecteur optique qui est disposé à l'extérieur du compteur et qui est adapté pour produire un signal utile à chaque fois qu'un index ou secteur actif agencé sur un disque passe devant le détecteur. Ce signal est amplifié et converti en signal carré de façon à être envoyé sur un réseau de transmission de données. Un tel dispositif de détection permet la détermination du nombre de tours du disque mais ne permet pas de déterminer le sens de rotation de ce disque.

Or un compteur de fluide, en particulier un compteur d'eau, peut fonctionner en entrée de fluide et également en sortie de fluide. C'est le cas par exemple lors de vidage de canalisations d'arrivée d'eau lors de travaux ou lors d'à-coups de flux entraînant un aller et retour de l'eau.

Le dispositif d'affichage de la consommation, par exemple un agencement à rouleaux chiffrés, tient compte de cette donnée.

Le but de l'invention est de fournir un dispositif de détection optique capable de déterminer le sens de circulation de l'eau et donc le sens de rotation du disque indicateur afin de prendre en compte une consommation que l'on peut qualifier de négative et de fournir une donnée de consommation identique à celle fournie par le dispositif d'affichage classique du compteur.

Pour ce faire, l'invention propose un dispositif de détection optique pour compteur comportant un indicateur de consommation formé d'un disque rotatif pourvu d'un secteur dit actif et des éléments optiques du type émetteur et du type récepteur en vis à vis dudit disque, dont le signal optique reçu est traité pour déduire le nombre de tours dudit disque, comprenant au moins deux dits éléments optiques d'un type et au moins un dit élément optique de l'autre type caractérisé en ce que ledit secteur est un secteur réfléchissant d'angle au centre dit premier angle compris entre 45 et 225° et lesdits deux éléments optiques d'un type sont des éléments émetteurs d'un faisceau de lumière, les droites reliant chaque trace sur le disque de ces faisceaux au centre du disque formant un angle au centre dit second angle non nul.

Ces éléments optiques peuvent être intégrés dans un même composant et un capot adéquat du compteur et du module peut limiter les faisceaux de lumière parasites.

Selon un mode de réalisation préféré, le premier angle est égal au double du second angle.

Le secteur réfléchissant présente, avantageusement, un angle au centre de 180°.

Le choix d'un secteur réfléchissant présentant un angle au centre de 180° assure une optimisation de la fréquence du ou des élément(s) émetteur(s) relativement à la consommation d'énergie électrique. Or de tels compteurs ou de tels modules fonctionnent sur pile ou batterie électrique et il est très avantageux que leur fonctionnement présente une basse consommation. Une séquence unique du faisceau lumineux peut être choisie qui est optimale quels que soient les états détectés. Cette séquence unique assure des états équilibrés en terme d'angle et de durée à vitesse constante.

De préférence, le dispositif de détection optique comporte deux éléments optiques émetteurs et un élément optique récepteur.

Ce mode de réalisation a pour avantage d'être le moins onéreux, les émetteurs optiques étant en général moins cher que les récepteurs optiques.

Selon une autre variante, le dispositif comporte deux éléments optiques émetteurs et deux éléments optiques récepteurs associés par couple, chaque élément récepteur recevant le faisceau optique de l'élément émetteur du même couple.

Avantageusement, les deux émetteurs optiques fonctionnent séquentiellement.

Avantageusement, les trois éléments optiques sont sensiblement alignés et l'élément optique récepteur est entre les éléments émetteurs.

De préférence, le secteur non réfléchissant du disque est incliné par rapport à l'axe du disque.

Le positionnement des éléments peut être tel que l'angle d'incidence du faisceau optique émis et reçu par les éléments optiques est inférieur a 60°.

Le dispositif peut comprendre un dispositif de collimation du faisceau optique et ce dispositif de collimation peut comporter des fentes de limitation des interférences parasites entre faisceaux de lumière.

Cet agencement permet d'obtenir des transitions d'état plus franches et un meilleur couplage entre émetteurs et récepteurs optiques.

Avantageusement, le dispositif conforme à l'invention comporte un émetteur optique supplémentaire de détection de présence.

Selon une première variante, la trace sur le disque de cet émetteur de détection de présence est centrée sur l'axe de symétrie du disque.

Selon une seconde variante, ledit émetteur optique de détection de présence est associé en un couple à un élément optique récepteur, la trace sur le disque de cet émetteur étant sensiblement équidistante de celles desdits deux précédents éléments optiques émetteurs.

Cette caractéristique permet de vérifier le positionnement correct du module sur le compteur et déceler d'éventuelles fraudes ou mauvais positionnements.

L'invention concerne également un compteur de fluide comportant un disque rotatif partie d'un dispositif de détection optique tel que précisé ci-dessus.

L'invention concerne enfin un module de détection destiné à coopérer avec un compteur de fluide et comportant lesdits éléments optiques parties d'un dispositif tel que précisé ci-dessus.

Avantageusement, ce module comporte également un dispositif de collimation du faisceau optique.

Selon un mode de réalisation préféré, l'élément optique émetteur et l'élément optique récepteur d'au moins un desdits couples sont logés dans un support commun.

Avantageusement, ledit support présente une lèvre d'étanchéité entourant le couple d'éléments optiques et destinée à venir en appui contre ledit compteur de fluide.

Avantageusement, ledit support comporte une bride séparant les deux éléments optiques et destinée à venir en appui contre ledit compteur de fluide.

L'invention est décrite ci-après plus en détail à l'aide de figures ne représentant qu'un mode de réalisation préféré de l'invention.
La figure 1 est une vue d'un compteur et d'un module conformes à l'invention.
La figure 2 est une vue en coupe d'un dispositif de détection conforme à l'invention, selon un premier mode de réalisation.
La figure 3 est une vue de dessus d'un disque rotatif partie d'un dispositif de détection conforme à l'invention, selon différentes positions.
La figure 4 est un diagramme illustrant le traitement des données détectées par un dispositif de détection conforme à l'invention.
La figure 5 est une vue en coupe d'un dispositif de détection conforme à l'invention, selon un second mode de réalisation.
La figure 6 est une vue en coupe partielle d'une variante de réalisation d'un dispositif de détection conforme à l'invention.
La figure 7 est une vue en coupe partielle d'une autre variante de réalisation d'un dispositif de détection conforme à l'invention.
La figure 8 est une vue de dessus d'un disque rotatif partie d'un dispositif de détection conforme à l'invention.
La figure 9 est une vue en coupe d'un dispositif de détection conforme à l'invention, selon un autre mode de réalisation.
La figure 10 est une vue partielle en coupe plus détaillée de cet autre mode de réalisation,

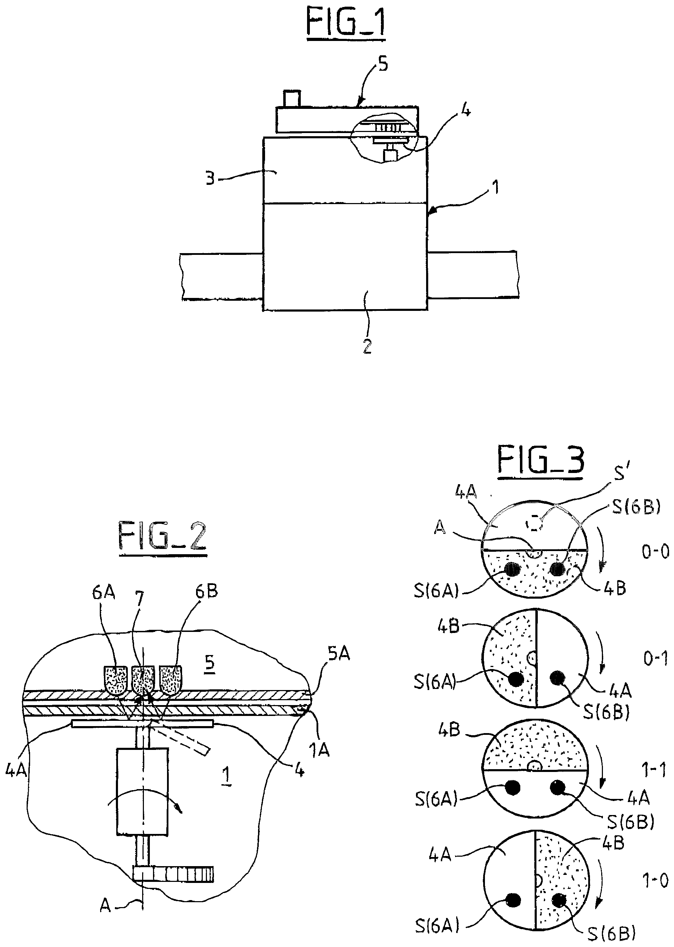

La figure 1 est une vue de face d'un compteur 1 de fluide, plus précisément d'eau, comportant un carter dit bâche 2 pourvue d'une canalisation d'arrivée et une canalisation de sortie de l'eau et surmontée d'un totaliseur 3 contenant un mécanisme de transmission et de réduction de la rotation de l'arbre d'un élément mesurant tel qu'une turbine ou une chambre volumétrique, contenu dans la bâche 2 vers un dispositif d'affichage de la consommation non représenté et un disque indicateur 4 rotatif parallèle à une paroi supérieure transparente du totaliseur.

Un module de détection optique 5 à paroi inférieure au moins partiellement transparente est posé sur la paroi supérieure du compteur 1 afin de détecter la consommation d'eau ainsi que son sens de circulation.

La figure 2 illustre plus en détail le dispositif de détection optique conforme à l'invention.

Le compteur 1 comporte donc une paroi transparente 1A et parallèle à cette paroi un disque indicateur 4 entraîné par un mécanisme de transmission. Ce disque comporte un secteur réfléchissant d'angle au centre compris entre 45° et 225° et de préférence égal à 180°.

Disposés de façon à venir face à ce disque 4 lorsque le module est mis en place sur le compteur 1, le module 5 comporte trois éléments optiques, plus précisément deux émetteurs optiques 6A, 6B disposés chacun de chaque côté d'un récepteur optique 7. Si l'on considère l'axe A du disque 4, le récepteur optique 7 est décalé de cet axe A et les trois éléments optiques 6A, 6B et 7 sont alignés parallèlement à un diamètre du disque 4.

De préférence, les émetteurs optiques 6A, 6B sont des diodes LED émettrices d'un faisceau infra rouge qui traverse les deux parois transparentes 5A, 1A et se réfléchit sur le disque 4. Si ce faisceau se réfléchit sur le secteur réfléchissant 4A, il est réfléchi et reçu par le récepteur optique 7, constitué de préférence d'une photodiode ou d'un phototransistor. S'il rencontre le reste du disque, soit le secteur 4B, seule une petite partie de ce faisceau est réfléchie et reçue par le récepteur 7. Un faisceau réfléchi est estimé nul s'il est inférieur à une valeur seuil égale à cette petite partie réfléchie par le secteur non réfléchissant du disque.

Afin de diminuer cette partie réfléchie sur le secteur non réfléchissant 4B du disque indicateur 4, ce secteur peut avoir une surface granitée ou rayée, peinte en noir mat ou même être incliné comme représenté en pointillés sur la figure 2, afin de dévier cette partie du faisceau réfléchi. L'on peut donc opérer de façon à minimiser le pouvoir réfléchissant du secteur 4B et à maximiser celui du secteur 4A.

Sur la figure 3, sont représentées différentes positions relatives du disque 4 et des traces sur le disque du faisceau S(6A), S(6B) émis par les émetteurs 6A, 6B, vu selon un plan perpendiculaire à l'axe A du disque.

Le sens de rotation du disque y est représenté par une flèche, ce sens correspondant à une consommation normale positive de fluide. L'angle formé par les deux traces des éléments émetteurs 6A, 6B et de centre sur l'axe dudit disque est sensiblement égal à 90°.

Dans la position 3A, les deux traces S(6A), S(6B) se situent sur le secteur non réfléchissant 4B du disque 4. Le signal optique reçu par le récepteur 7 est inférieur à la valeur seuil et estimé égal à zéro, ceci pour le faisceau émis par chaque émetteur 6A, 6B. Est donc détecté un couple de valeurs égal à (0, 0).

Dans la position 3B, la trace S(6A) se situe sur le secteur non réfléchissant 4B du disque 4 et la trace S(6B) se situe sur le secteur réfléchissant 4A du disque 4. Le signal optique reçu par le récepteur 7 est inférieur à la valeur seuil et estimé égal à zéro, pour le faisceau émis par l'émetteur 6A. Le signal optique reçu par le récepteur 7 est maximal, pour le faisceau émis par l'émetteur 6B. Est donc détecté un couple de valeurs égal à (0, 1).

Dans la position 3C, les deux traces S(6A), S(6B) se situent sur le secteur réfléchissant 4A du disque 4. Le signal optique reçu par le récepteur 7 est maximal, ceci pour le faisceau émis par chaque émetteur 6A, 6B. Est donc détecté un couple de valeurs égal à (1, 1).

Dans la position 3D, la trace S(6A) se situe sur le secteur réfléchissant 4A du disque 4 et la trace S(6B) se situe sur le secteur non réfléchissant 4B du disque 4. Le signal optique reçu par le récepteur 7 est maximal, pour le faisceau émis par l'émetteur 6A et est inférieur à la valeur seuil et estimé égal à zéro, pour le faisceau émis par l'émetteur 6B. Le signal optique reçu par le récepteur 7 est. Est donc détecté un couple de valeurs égal à (1, 0).

En consommation positive, la série des signaux reçus est donc (0, 0), (0, 1), (1, 1), (1, 0) et la fréquence de leurs changements d'état permet de déterminer la vitesse de rotation du disque indicateur 4 et donc la consommation. Une série comportant un des couples précédents dans un autre ordre permet de détecter une modification du sens de rotation du disque indicateur 4 et donc une consommation négative.

Il est ici à remarquer qu'au lieu de considérer et d'exploiter la fréquence des changements d'états pour en déterminer le débit de la consommation, une application plus simple de l'invention consiste à considérer et à exploiter les changements d'états pour en déterminer le volume consommé.

Au lieu d'opérer comme ci-dessus, l'on peut rechercher une réflexion petite dite minimale sur le secteur dit non réfléchissant 4B du disque 4 au lieu de rechercher une réflexion quasi-nulle. Cette réflexion minimale correspond à la valeur seuil précisée ci-dessus.

Ainsi, l'invention permet également de détecter le positionnement du module sur le compteur. En effet, le signal peut avoir trois valeurs :
- nulle, indiquant que le module n'est pas positionné,
- minimale, indiquant une réflexion sur le secteur non réfléchissant 4B,
- maximale, indiquant une réflexion sur le secteur réfléchissant 4A.

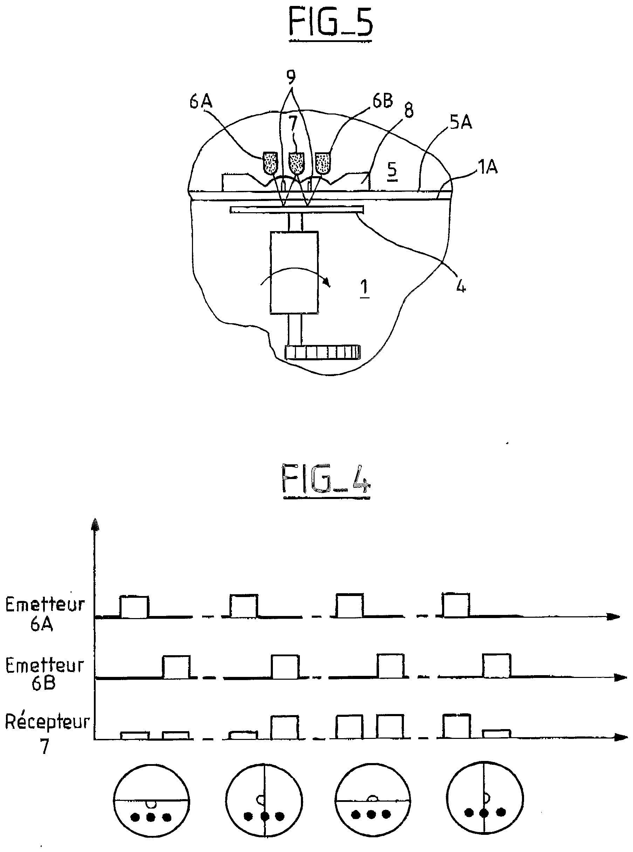

Ces signaux schématisés en signaux carrés sont représentés sur la figure 5. Le traitement de ces signaux n'exige aucune électronique complexe et peut être traité directement par un microcontrôleur.

Dans ce qui précède, dans un but de simplification de la description, il a été question d'une impulsion de lumière émise par les diodes 6A, 6B lors d'un quart de tour du disque 4. Selon l'invention, les émetteurs optiques 6A, 6B fonctionnent séquentiellement ce qui permet de déterminer les signaux et les états correspondants et a pour avantage de nécessiter une consommation globale réduite. Le faisceau de lumière est émis sous forme d'impulsions de fréquence liée à la vitesse de rotation maximale de la cible.

Précédemment, les éléments optiques 6A, 6B, 7 sont avantageusement des composants optiques CMS (Composants Montés en Surface) et simples, c'est-à-dire sans collimation intégrée aux composants.

La figure 5 illustre un second mode de réalisation du dispositif de détection optique conforme à l'invention.

Selon cet autre mode de réalisation, un dispositif de collimation 8 du faisceau optique de type lentille est soit intercalé entre la paroi transparente 5A du module 5 et les éléments optiques 6A, 6B, 7, soit c'est directement la paroi transparente 5A du module 5 qui est conformée en dispositif de collimation 5 comme représenté sur la figure 5.

Des fentes 9 sont agencées dans ce dispositif de collimation 8 pour limiter les interférences parasites entre les impulsions de lumière infra rouge émises et reçues par les différents éléments optiques 6A, 6B, 7.

A la place de ces fentes, peuvent être utilisées des parois séparatrices entre émetteurs et récepteurs optiques.

Les éléments optiques 6A, 6B, 7 peuvent être ici aussi des composants optiques CMS (Composants Montés en Surface).

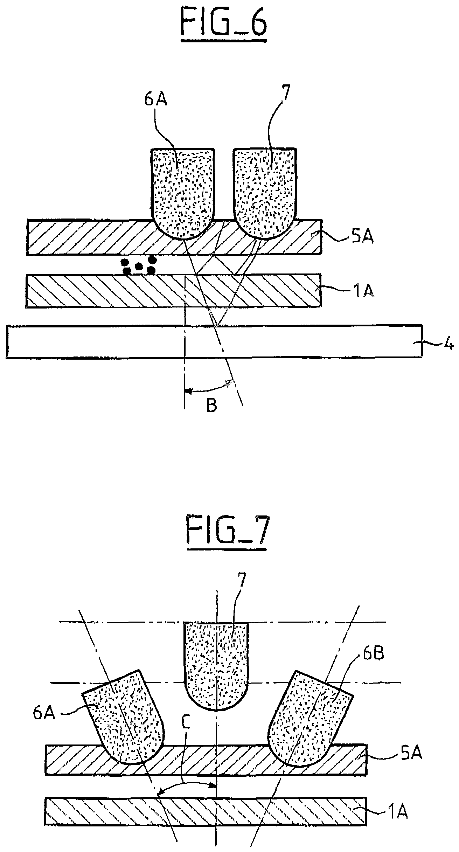

La figure 6 illustre une variante de réalisation conforme à l'invention.

Bien qu'un dispositif d'étanchéité puisse être prévu entre le module de relevé et le totalisateur, de type joint ou emmanchement par exemple, peuvent se déposer sur la paroi transparente 1A du compteur 1 des particules ou salissures solides ou liquides qui interfèrent dans la transmission du faisceau de lumière au travers des parois transparentes 1A. 5A du compteur 1 et du module de détection 5,

Afin que cette interférence soit minimisée, les éléments optiques 6A, 6B, 7 sont disposées très proches les uns par rapport aux autres, afin que l'angle d'incidence B de ce faisceau soit très faible et de préférence inférieur à 60°. Ainsi les pertes de puissance du faisceau dues aux particules ou salissures sont minimes et le faisceau transmis aux travers des parois transparentes reste de forte puissance. De préférence, la distance entre éléments optiques 6A, 6B, 7 est inférieur à 2mm.

Une autre solution pour minimiser cet angle d'incidence B est de choisir une distance entre les éléments optiques et le disque adéquate, l'angle B étant d'autant plus petit que cette distance est grande.

La figure 7 illustre une autre variante de l'invention.

Ici le récepteur optique 7 est disposé avec son axe de symétrie dirigé dans le sens du faisceau de lumière perpendiculaire la paroi transparente 1A du module et les deux émetteurs optiques 6A, 6B ont leur propre axe de symétrie équivalent dans un plan perpendiculaire à cette paroi 1A mais incliné d'un angle C par rapport à cet axe de symétrie du récepteur optique central 7. De préférence, cet angle C est inférieur à 60°. Par ailleurs, le récepteur 7 est situé au-dessus des diodes émettrices 6A et 6B de façon à éviter le couplage direct entre émetteur et récepteur sans passer par la cible tournante.

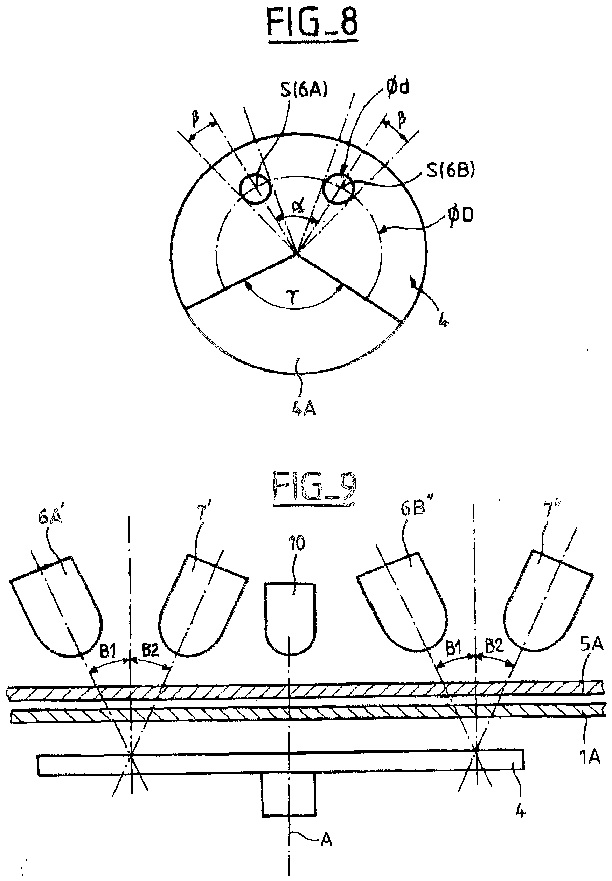

Sur la figure 8, est représentée une position relative du disque 4 et des traces du faisceau S(6A), S(6B) émis par les émetteurs 6A, 6B, vu selon un plan perpendiculaire à l'axe A du disque.

Le secteur réfléchissant 4A est un secteur d'angle au centre dit premier angle γ compris entre 45 et 225° et les droites reliant chaque trace S(6A), S(6B) des faisceaux au centre du disque 4 forment un angle au centre dit second angle α non nul.

Avantageusement, afin d'obtenir quatre états tels que représentés sur la figure 3, équilibrés en terme d'angle ou de durée à vitesse constante, le premier angle γ est égal au double du second angle α et ,de préférence, comme décrit ci-dessus égal à 180°.

Par ailleurs, la taille des traces S(6A), S(6B) des faisceaux est minimisée afin de réaliser ces états de façon à optimiser en durée ces quatre états stables.

Dans les modes de réalisation décrits, le dispositif de détection optique comporte deux éléments optiques émetteurs et un élément optique récepteur, qui reçoit les deux faisceaux optiques émis. Ces agencements sont particulièrement économiques, vu le coût d'une photodiode ou d'un phototransistor.

Cependant, toujours dans le cadre de l'invention, il peut être utilisé deux éléments optiques émetteurs et deux éléments optiques récepteurs, associés par couple, chaque élément récepteur recevant le faisceau optique de l'élément émetteur du même couple.

Un tel dispositif de détection selon l'invention est décrit sur la figure 9.

Deux couples comportant chacun un émetteur optique 6A', 6B" et un récepteur optique 7', 7" sont disposés dans le module. Chaque émetteur 6A', 6B" émet un faisceau optique au travers des parois en vis-à-vis du module 5A et du compteur 1A et les traces des deux faisceaux sur le disque 4 sont du même type que celles précédemment décrites, sur la figure 3.

Comme déjà vu, afin de minimiser l'interférence des particules ou salissures solides ou liquides dans la transmission du faisceau de lumière au travers des parois transparentes 1A, 5A du compteur 1 et du module de détection 5, l'angle d'incidence B des faisceaux est faible et de préférence inférieur à 60°. Pour ce faire, de préférence, les éléments optiques 6A', 7', 6B", 7" sont inclinés d'un angle B1 et B2 par rapport au plan de symétrie de chaque couple, perpendiculaire aux parois du module 5A ou du compteur 1A. Ces deux angles B1 et B2 peuvent être différents et compris entre 10 et 20°.

Sur le même principe optique, il est possible de réaliser un dispositif de détection de présence du module sur le compteur. Un émetteur optique commun au dispositif de détection déjà décrit ou dédié à la détection de présence est alors disposé face à une surface réfléchissante, avantageusement le secteur réfléchissant 4A déjà décrit. L'absence de faisceau réfléchi indique que le module n'est pas positionné sur le compteur. Une modification de ce faisceau réfléchi indique que le module n'est pas correctement positionné sur le compteur.

Avantageusement, un émetteur optique supplémentaire dédié 10 est utilisé pour ce faire, cet émetteur étant par exemple centré sur le disque 4. Plus généralement, la trace du faisceau optique émis par cet émetteur 10 sur le disque 4 est centrée sur l'axe de rotation A du disque 4.

Selon une autre variante de réalisation de la détection de présence, deux couples comportant chacun un émetteur optique 6A', 6B" et un récepteur optique 7', 7" sont disposés dans le module comme précédemment décrit et la détection de présence est effectuée également par un tel couple comportant un émetteur optique et un récepteur optique. Si l'on se réfère à la figure 3A, la trace S' de l'émetteur correspondant de présence est équidistante des traces S(6A) et S(6B) des émetteurs de détection et avantageusement à la même distance du centre du disque que ceux-ci.

Dans un tel agencement, la présence est détectée par le fait qu'au moins un des couples d'émetteur et récepteur détecte un état (1). c'est-à-dire qu'au moins un récepteur reçoit un rayon d lumière réfléchi. Autrement dit, si aucun récepteur ne reçoit de rayon, le module n'est pas présent sur le totaliseur.

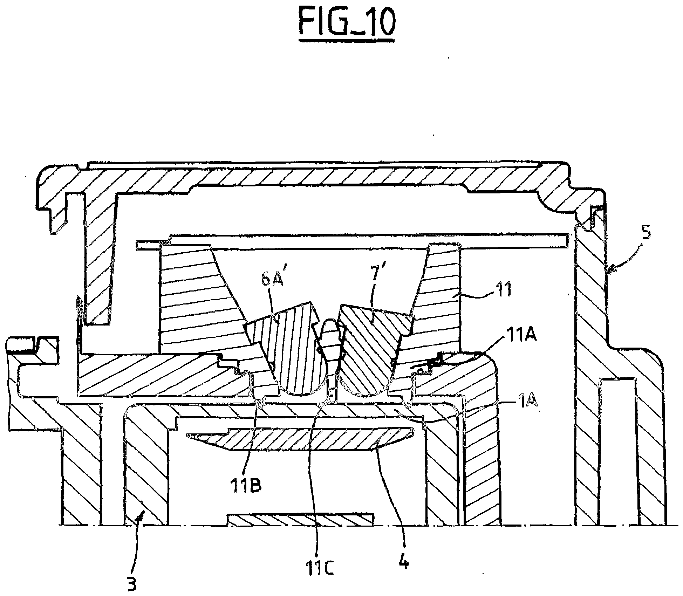

Un agencement préféré de disposition d'un couple d'émetteur 6A' et de récepteur 7' est représenté en coupe sur la figure 10.

On retrouve sur cette figure un module 5 disposé sur un totaliseur 3 contenant un mécanisme de transmission et de réduction de la rotation de l'arbre d'un élément mesurant tel qu'une turbine ou une chambre volumétrique, vers un dispositif d'affichage de la consommation non représenté et un disque indicateur 4 rotatif parallèle à une paroi supérieure transparente du totaliseur. Le module de détection optique 5 ne comporte pas comme précédemment une paroi inférieure au moins partiellement transparente. Sa paroi inférieure comporte ici un orifice destiné à recevoir par emboîtement un support 11 d'au moins un couple d'émetteur et de récepteur, de préférence des diodes électroluminiscentes 6A', 7'. Cet agencement présente pour premier avantage de supprimer l'interface 5A précédemment envisagée et les réflexions parasites correspondantes.

Ce support 11 comprend deux logements où sont insérées les diodes 6A' et 7', qui rayonnent donc directement vers l'extérieur du module 5, ces logements débouchant vers l'extérieur.

Par ailleurs, la partie d'emboîtement 11A du support 11 présente autour des deux embouchures de ces logements, une lèvre 11B agencée de façon fermée, par exemple circulaire, et dont la fonction est de venir en appui contre la paroi 1A du totaliseur 5, une fois le module mis en place sur ce dernier. Ainsi, est obtenue au droit des diodes une zone parfaitement étanche, évitant une fois le module mis en place l'insertion d'eau ou de salissures susceptibles de dévier le rayon lumineux, comme il a été illustré plus haut en référence à la figure 6.

Les deux logements de diodes sont de plus séparés par une bride 11C dont la fonction est également de venir en appui contre la paroi 1A du totaliseur 5, une fois le module mis en place sur ce dernier. Cette bride d'appui 11C fournit une séparation entre les deux diodes 6A' et 7'. Permettant de supprimer toute réflexion parasite entre ces diodes ou couplage direct entre émetteur et récepteur, comme il a été évoqué plus haut en référence à la figure 7.

## Revendications

1. Dispositif de détection optique pour compteur comportant un indicateur de consommation visible formé d'un disque rotatif (4) pourvu d'un secteur dit actif (4A) et des éléments optiques du type émetteur et du type récepteur en vis à vis dudit disque, dont le signal optique reçu est traité pour déduire au moins le nombre de tours dudit disque, comprenant au moins deux dits éléments optiques (6A, 6B) d'un type et au moins un dit élément optique (7) de l'autre type, lesdits deux éléments optiques d'un type (6A, 6B) étant des éléments émetteurs d'un faisceau de lumière, les droites reliant chaque trace (S(6A), S(6B)) sur le disque (4) de ces faisceaux au centre du disque formant un angle au centre dit second angle (α) non nul, **caractérisé en ce que** ledit secteur (4A) est un secteur réfléchissant d'angle au centre dit premier angle (γ) compris entre 45 et 225°.

2. Dispositif selon la revendication 1, **caractérisé en ce que** ledit premier angle (γ) est égal au double dudit second angle (α).

3. Dispositif selon la revendication 1 ou 2, **caractérisé en ce que** ledit secteur réfléchissant (4A) présente un angle au centre (γ) de 180°.

4. Dispositif selon l'une des revendications précédentes, **caractérisé en ce qu'**il comporte deux éléments optiques émetteurs (6A, 6B) et un élément optique récepteur (7).

5. Dispositif selon la revendication 4, **caractérisé en ce que** lesdits trois éléments optiques (6A, 6B, 7) sont sensiblement alignés et l'élément optique récepteur (7) est entre les éléments émetteurs (6A, 6B).

6. Dispositif selon l'une des revendications précédentes, **caractérisé en ce qu'**il comporte deux éléments optiques émetteurs (6A', 6B") et deux éléments optiques récepteurs (7', 7"), associés par couple, chaque élément récepteur recevant le faisceau optique de l'élément émetteur du même couple.

7. Dispositif selon l'une des revendications précédentes, **caractérisé en ce que** les deux émetteurs optiques (6A, 6B) fonctionnent séquentiellement.

8. Dispositif selon l'une des revendications précédentes, **caractérisé en ce que** le secteur non réfléchissant (4B) dudit disque 4 est incliné par rapport à l'axe du disque.

9. Dispositif selon l'une des revendications précédentes, **caractérisé en ce que** le positionnement desdits éléments optiques (6A, 6B, 7) est tel que l'angle d'incidence (B) du faisceau optique émis et reçu par les éléments optiques est inférieur à 60°.

10. Dispositif selon l'une des revendications précédentes, **caractérisé en ce qu'**il comprend un dispositif de collimation (8) du faisceau optique.

11. Dispositif selon la revendication 10, **caractérisé en ce que** ledit dispositif de collimation (8) comporte des fentes (9) de limitation des interférences parasites entre faisceaux de lumière.

12. Dispositif selon l'une des revendications précédentes, **caractérisé en ce qu'**il comporte un émetteur optique supplémentaire (10) dont la trace sur le disque (4) est centrée sur l'axe de symétrie du disque (A).

13. Compteur de fluide (1) comportant un disque rotatif (4) partie d'un dispositif de détection optique selon l'une des revendications précédentes.

14. Module de détection (5) destiné à coopérer avec un compteur de fluide (1) et comportant lesdits éléments optiques (6A, 6B, 7) parties d'un dispositif selon l'une des revendications 1 à 12.

15. Module selon la revendication 14, **caractérisé en ce qu'**il comporte également un dispositif de collimation (8) du faisceau optique.

## Patentansprüche

1. Optische Detektionsvorrichtung für einen Zähler, umfassend einen sichtbaren Verbrauchsindikator, der aus einer Drehscheibe (4) gebildet ist, versehen mit einem als aktiv bezeichneten Sektor (4A) und optischen Elementen des Emitter-Typs und des Empfänger-Typs gegenüber der Scheibe, wobei das empfangene optische Signal behandelt wird, um mindestens die Anzahl der Umdrehungen der Scheibe abzuleiten, umfassend mindestens zwei solche optischen Elemente (6A, 6B) eines Typs und mindestens ein solches optisches Element (7) des anderen Typs, wobei die beiden optischen Elemente (6A, 6B) eines Typs die Emitter-Elemente eines Lichtstrahls sind, wobei die Geraden, welche jede Spur (S(6A), S(6B)) auf der Scheibe (4) dieser Strahlen mit dem Zentrum der Scheibe verbinden, einen Winkel, der als zweiter Winkel (α) bezeichnet wird, von nicht Null mit dem Zentrum bilden, **dadurch gekennzeichnet, dass** der Sektor (4A) ein reflektierender Sektor eines Winkels mit dem Zentrum, der als erster Winkel (γ) bezeichnet wird, zwischen 45 und 225° ist.

2. Vorrichtung nach Anspruch 1, **dadurch gekennzeichnet, dass** der erste Winkel (γ) gleich dem Doppelten des zweiten Winkels (α) ist.

3. Vorrichtung nach Anspruch 1 oder 2, **dadurch gekennzeichnet, dass** der reflektierende Sektor (4A) einen Winkel mit dem Zentrum (γ) von 180° aufweist.

4. Vorrichtung nach einem der vorhergehenden Ansprüche, **dadurch gekennzeichnet, dass** diese zwei optische Emitter-Elemente (6A, 6B) und ein optisches Empfänger-Element (7) umfasst.

5. Vorrichtung nach Anspruch 4, **dadurch gekennzeichnet, dass** die drei optischen Elemente (6A, 6B, 7) im Wesentlichen ausgerichtet sind, und sich das optische Empfänger-Element (7) zwischen den Emitter-Elementen (6A, 6B) befindet.

6. Vorrichtung nach einem der vorhergehenden Ansprüche, **dadurch gekennzeichnet, dass** diese zwei optische Emitter-Elemente (6A', 6B") und zwei optische Empfänger-Elemente (7', 7") umfasst, die paarweise assoziiert sind, wobei jedes Empfänger-Element den optischen Strahl des Emitter-Elements desselben Paars empfängt.

7. Vorrichtung nach einem der vorhergehenden Ansprüche, **dadurch gekennzeichnet, dass** die beiden optischen Emitter (6A, 6B) sequentiell betrieben werden.

8. Vorrichtung nach einem der vorhergehenden Ansprüche, **dadurch gekennzeichnet, dass** der nichtreflektierende Sektor (4B) der Scheibe (4) in Bezug auf die Achse der Scheibe geneigt ist.

9. Vorrichtung nach einem der vorhergehenden Ansprüche, **dadurch gekennzeichnet, dass** die Positionierung der optischen Elemente (6A, 6B, 7) derart ist, dass der Einfallswinkel (B) des optischen Strahls, der von den optischen Elementen emittiert und empfangen wird, kleiner ist als 60 °C.

10. Vorrichtung nach einem der vorhergehenden Ansprüche, **dadurch gekennzeichnet, dass** diese eine Kollimationsvorrichtung (8) des optischen Strahls umfasst.

11. Vorrichtung nach Anspruch 10, **dadurch gekennzeichnet, dass** die Kollimationsvorrichtung (8) Schlitze (9) zur Begrenzung parasitärer Interferenzen zwischen Lichtstrahlen umfasst.

12. Vorrichtung nach einem der vorhergehenden Ansprüche, **dadurch gekennzeichnet, dass** diese einen ergänzenden optischen Emitter (10) umfasst, dessen Spur auf der Scheibe (4) auf der Symmetrieachse der Scheibe (A) zentriert ist.

13. Fluidzähler (1), umfassend eine Drehscheibe (4), die ein Teil einer optischen Detektionsvorrichtung nach einem der vorhergehenden Ansprüche ist.

14. Detektionsmodul (5), welches dazu bestimmt ist, mit einem Fluidzähler (1) zusammenzuwirken, und die optischen Elemente (6A, 6B, 7) umfasst, die Teile einer Vorrichtung nach einem der Ansprüche 1 bis 12 sind.

15. Modul nach Anspruch 14, **dadurch gekennzeichnet, dass** dieses auch eine Kollimationsvorrichtung (8) eines optischen Strahls umfasst.

## Claims

1. Optical detection device for a meter, including a visible consumption indicator formed of a rotating disc (4) provided with what is called an active sector (4A) and with optical elements of emitter type and of receiver type facing said disc, the received optical signal of which is processed in order to deduce at least the number of revolutions of said disc, comprising at least two said optical elements (6A, 6B) of one type and at least one said optical element (7) of the other type, said two optical elements of one type (6A, 6B) being elements that emit a light beam, the straight lines linking each trace (S(6A), S(6B)) on the disc (4) from these beams to the centre of the disc forming a central angle, called nonzero second angle (α), **characterized in that** said sector (4A) is a reflective sector with a central angle, called first angle (γ), of between 45° and 225°.

2. Device according to Claim 1, **characterized in that** said first angle (γ) is equal to double said second angle (α).

3. Device according to Claim 1 or 2, **characterized in that** said reflective sector (4A) has a central angle (γ) of 180°.

4. Device according to one of the preceding claims, **characterized in that** it includes two emitter optical elements (6A, 6B) and one receiver optical element (7).

5. Device according to Claim 4, **characterized in that** said three optical elements (6A, 6B, 7) are substantially aligned, and the receiver optical element (7) is between the emitter elements (6A, 6B).

6. Device according to one of the preceding claims, **characterized in that** it includes two emitter optical elements (6A', 6B") and two receiver optical elements (7', 7") that are associated in pairs, each receiver element receiving the optical beam from the emitter element of the same pair.

7. Device according to one of the preceding claims, **characterized in that** the two optical emitters (6A, 6B) operate sequentially.

8. Device according to one of the preceding claims, **characterized in that** the non-reflective sector (4B) of said disc (4) is inclined with respect to the axis of the disc.

9. Device according to one of the preceding claims, **characterized in that** the position of said optical elements (6A, 6B, 7) is such that the angle of incidence (B) of the optical beam emitted and received by the optical elements is less than 60°.

10. Device according to one of the preceding claims, **characterized in that** it comprises a collimator (8) for collimating the optical beam.

11. Device according to Claim 10, **characterized in that** said collimator (8) includes slots (9) for limiting stray interference between light beams.

12. Device according to one of the preceding claims, **characterized in that** it includes an additional optical emitter (10) whose trace on the disc (4) is centred on the axis of symmetry of the disc (A).

13. Fluid meter (1) including a rotating disc (4) that forms part of an optical detection device according to one of the preceding claims.

14. Detection module (5) intended to interact with a fluid meter (1) and including said optical elements (6A, 6B, 7) that form part of a device according to one of Claims 1 to 12.

15. Module according to Claim 14, **characterized in that** it also includes a collimator (8) for collimating the optical beam.
